# EUROPEAN PATENT APPLICATION

(11) **EP 4 806 694 A1**
(43) Date of publication of application: **16.09.2026**
(21) Application number: 24887492.7
(22) Date of filing: 30.07.2024
(51) Int. Cl.: B60K 31/02

(54) **VEHICLE SPEED LIMITING CONTROL METHOD AND APPARATUS, DEVICE, AND STORAGE MEDIUM**

(30) Priority: 07.11.2023 CN 202311476989
(71) Applicant: Segway Technology Co., Ltd., Jiangsu 213000 (CN)
(72) Inventor: LI, Xiaohui, hangzhou, Jiangsu 213000 (CN)
(74) Representative: Pfenning, Meinig & Partner mbB
(86) International application number: PCT/CN2024/108573
(87) International publication number: WO 2025/097870

(57) **Abstract**

A control method for vehicle speed limitation comprises the following steps: step S201: determining a difference value between an actual vehicle speed and a target vehicle speed of a vehicle during travel; step S202: determining an average rotational speed of the vehicle; and step S203: adjusting a rotational speed of the vehicle according to the difference value and the average rotational speed, so as to control the actual vehicle speed to be within a preset range of the target vehicle speed. In the control method for vehicle speed limitation, the vehicle speed is controlled by controlling the rotational speed of the vehicle, and the rotational speed will not change greatly in the process of controlling the vehicle speed, which can effectively eliminate the jerking. The method adjusts the rotational speed of the vehicle according to the average rotational speed of the vehicle, which has high flexibility and a self-correction function. An apparatus, a device and a storage medium for implementing the control method for vehicle speed limitation are also provided.

## Description

This application claims priority to Chinese Patent Application No. 202311476989.9, filed to China National Intellectual Property Administration on November 07, 2023 and entitled "CONTROL METHOD, APPARATUS, DEVICE AND STORAGE MEDIUM FOR VEHICLE SPEED LIMITATION", which is hereby incorporated by reference in its entirety.

### TECHNICAL FIELD

The present application relates to the field of vehicle control technologies and, in particular, to a control method, an apparatus, a device and a storage medium for vehicle speed limitation.

### BACKGROUND

An all-terrain vehicle (ATV) is a vehicle capable of traveling on any type of terrain, moving with ease in areas where ordinary vehicles struggle to maneuver. This type of vehicle has a wide range of uses and is not restricted by road conditions. It is widely used in North America and Western Europe, with the usage showing a steady upward trend year by year.

For all-terrain vehicles equipped with anti-lock braking systems, the latest regulations introduce new requirements for adjustable speed limitation on such vehicles. Their speed can be adjusted within a range from a minimum speed limit to a maximum achievable speed. The speed can be increased or decreased in a certain gradient, for example, 5 km/h, through adjustable buttons configured on the vehicles. In the implementation of adjustable speed limitation, when a vehicle adopts a traditional mechanical throttle system and a continuously variable transmission, since the continuously variable transmission is controlled based on the target vehicle speed, while the mechanical throttle system cannot automatically adjust the air intake amount, the fuel injection and fuel cut-off frequency will be flexibly adjusted according to a difference value between an actual vehicle speed and the target vehicle speed. The closer the actual vehicle speed is to the target vehicle speed from low to high, the higher the fuel cut-off frequency will be, resulting in a large fluctuation of the rotational speed during the vehicle speed adjustment process, which in turn causes an obvious jerking of the vehicle.

In the process of adjusting the vehicle speed, how to effectively reduce the jerking of the vehicle and improve the driving experience of the driver is a technical problem to be urgently solved.

### SUMMARY

The present application provides a control method, an apparatus, a device and a storage medium for vehicle speed limitation, so as to reduce the jerking problem existing in the process of adjusting the vehicle speed.

In a first aspect, the present application provides a control method for vehicle speed limitation, including:
determining a difference value between an actual vehicle speed and a target vehicle speed of a vehicle during travel;
determining an average rotational speed of the vehicle, where the average rotational speed is associated with a load of the vehicle; and
adjusting a rotational speed of the vehicle according to the difference value and the average rotational speed, so as to control the actual vehicle speed to be within a preset range of the target vehicle speed.

Optionally, the adjusting the rotational speed of the vehicle according to the difference value and the average rotational speed includes:
obtaining an absolute value of the difference value; and
when the absolute value of the difference value is less than a first threshold value, determining a target rotational speed according to the average rotational speed, and adjusting the rotational speed of the vehicle to the target rotational speed.

Optionally, the determining the target rotational speed according to the average rotational speed and adjusting the rotational speed of the vehicle to the target rotational speed includes:
repeating the following steps until the absolute value of the difference value is less than or equal to a second threshold value:
judging whether the absolute value of the difference value is greater than the second threshold value, where the second threshold value is less than the first threshold value; and
if yes, determining the target rotational speed according to the average rotational speed and a first preset value, controlling the rotational speed of the vehicle according to the target rotational speed within a target time step, and obtaining an updated absolute value of the difference value and an updated average rotational speed after the target time step elapses, so as to control the rotational speed of the vehicle based on the updated difference value and the updated average rotational speed.

Optionally, the determining the target rotational speed according to the average rotational speed and the first preset value includes:
when the difference value is negative, determining a sum of the average rotational speed and the first preset value as the target rotational speed; and/or
when the difference value is positive, determining a difference between the average rotational speed and the first preset value as the target rotational speed.

Optionally, the determining the target rotational speed according to the average rotational speed and adjusting the rotational speed of the vehicle to the target rotational speed further includes:
when the absolute value of the difference value is less than or equal to the second threshold value, determining a range of the target rotational speed according to the average rotational speed and a second preset value;
where a minimum value of the target rotational speed is a difference between the average rotational speed and the second preset value, a maximum value of the target rotational speed is a sum of the average rotational speed and the second preset value, and the second preset value is greater than the first preset value.

Optionally, the adjusting the rotational speed of the vehicle according to the difference value and the average rotational speed further includes:
when the absolute value of the difference value is greater than or equal to the first threshold value, not performing an operation of controlling the rotational speed of the vehicle.

Optionally, the determining the average rotational speed of the vehicle includes:
obtaining a rotational speed of the vehicle corresponding to each moment within a preset time period, where a start moment of the preset time period is a moment N unit times before a current moment, and an end moment of the preset time period is the current moment; and
determining an average value calculated according to the rotational speed corresponding to each moment within the preset time period as the average rotational speed.

In a second aspect, the present application provides a control apparatus for vehicle speed limitation, the apparatus including:
a first determining module, configured to determine a difference value between an actual vehicle speed and a target vehicle speed of a vehicle during travel;
a second determining module, configured to determine an average rotational speed of the vehicle, where the average rotational speed is associated with a load of the vehicle; and
an adjusting module, configured to adjust a rotational speed of the vehicle according to the difference value and the average rotational speed, so as to control the actual vehicle speed to be within a preset range of the target vehicle speed.

In a third aspect, the present application provides an electronic device, including at least one processor and a memory;
where the memory stores computer-executable instructions;
the at least one processor executes the computer-executable instructions stored in the memory, so that the at least one processor executes the method according to any one of the first aspect.

In a fourth aspect, the present application provides a computer-readable storage medium, in which computer-executable instructions are stored, and when a processor executes the computer-executable instructions, the method according to any one of the first aspect is implemented.

The control method, apparatus, device and storage medium for vehicle speed limitation provided by the present application determine a difference value between an actual vehicle speed and a target vehicle speed of a vehicle during travel, determine an average rotational speed of the vehicle, where the average rotational speed is associated with a load of the vehicle, and adjust a rotational speed of the vehicle according to the difference value and the average rotational speed, so as to control the actual vehicle speed to be within a preset range of the target vehicle speed. The vehicle speed is controlled by controlling the rotational speed of the vehicle, and the rotational speed will not change greatly in the process of controlling the vehicle speed, which can effectively eliminate the jerking. In addition, the rotational speed of the vehicle is adjusted according to the average rotational speed of the vehicle, which has high flexibility and a self-correction function.

### BRIEF DESCRIPTION OF DRAWINGS

The accompanying drawings, which are incorporated herein and form part of this specification, illustrate embodiments of the present application and, together with the specification, serve to explain the principles of the present application.
FIG. 1 is a diagram of an application scenario of a control method for vehicle speed limitation provided by an embodiment of the present application.
FIG. 2 is a schematic flowchart of a control method for vehicle speed limitation provided by an embodiment of the present application.
FIG. 3 is a schematic flowchart of another control method for vehicle speed limitation provided by an embodiment of the present application.
FIG. 4 is a schematic structural diagram of a control apparatus for vehicle speed limitation provided by an embodiment of the present application.
FIG. 5 is a schematic hardware structural diagram of an electronic device provided by an embodiment of the present application.

Through the above accompanying drawings, specific embodiments of the present application have been clearly shown, and more detailed description will be given below. These accompanying drawings and text description are not intended to limit the scope of the concept of the present application in any way, but to explain the concept of the present application to those skilled in the art by referring to specific embodiments.

### DESCRIPTION OF EMBODIMENTS

Exemplary embodiments will be described in detail herein, examples of which are shown in the accompanying drawings. When the following description refers to the accompanying drawings, the same numerals in different drawings represent the same or similar elements unless otherwise indicated. The implementations described in the following exemplary embodiments do not represent all implementations consistent with the present application.

Generally, when performing speed limitation on a vehicle, the speed limitation is performed based on a target vehicle speed, that is, the vehicle is first controlled to reach the target vehicle speed, at which time the vehicle speed usually exceeds the target vehicle speed, and then the vehicle speed is reduced and controlled to be near the target vehicle speed through gradual adjustment. However, when a transmission in the vehicle is a continuously variable transmission and an adopted throttle is a mechanical throttle, a rotational speed of the vehicle changes greatly in the process of adjusting the vehicle speed, and the large change of the vehicle rotational speed will cause strong jerking, as well as large noise and vibration, thus making the driver not have a good driving experience. Among them, the jerking is more severe when the vehicle speed is low.

To solve the problem of jerking, it is found that there is no obvious jerking when the vehicle is in an L gear during speed limitation, because the engine rotational speed reaches a set maximum rotational speed range for speed limitation and the vehicle does not reach a corresponding maximum vehicle speed. Therefore, it is considered to indirectly convert the target vehicle speed control into rotational speed control during vehicle speed limitation to realize small-range fluctuation of the rotational speed, so as to reduce the jerking and improve the driving experience of the driver.

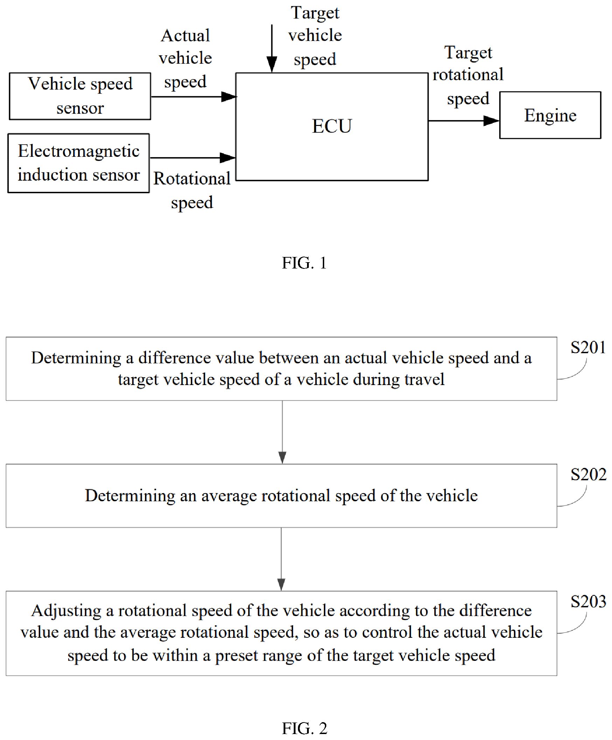

FIG. 1 is a diagram of an application scenario of a control method for vehicle speed limitation provided in an embodiment of the present application. As shown in FIG. 1, the execution subject of the present application is an ECU (Electronic Control Unit) electronic control unit. The ECU can be connected to a vehicle speed sensor and an electromagnetic induction sensor, and can obtain the actual vehicle speed from the vehicle speed sensor and the rotational speed from the electromagnetic induction sensor. In addition, the ECU can also obtain the target vehicle speed, determine the target rotational speed according to the actual vehicle speed, the target vehicle speed and the rotational speed, and control the rotational speed of the engine according to the target rotational speed. The fluctuation range of the rotational speed can be controlled by means of rotational speed limitation, thus solving the jerking problem. At the same time, the target rotational speed is determined according to the obtained rotational speed value, which can realize flexible automatic adjustment and correction, and make the speed limitation process of the vehicle more stable.

The method in the present application is also applicable to an all-terrain vehicle provided with a continuously variable transmission and belt drive, and is also applicable to dynamically adjustable speed limitation of an extended-range electric vehicle, taking into account flexible power output.

FIG. 2 is a schematic flowchart of a control method for vehicle speed limitation provided by an embodiment of the present application. The method is applied to an electronic control unit and includes steps S201 to S203:
S201, determining a difference value between an actual vehicle speed and a target vehicle speed of a vehicle during travel.

In the process of vehicle speed limitation, the actual vehicle speed of the vehicle can be obtained first, and whether to perform speed limitation on the vehicle is determined according to the relationship between the actual vehicle speed and the target vehicle speed. The actual vehicle speed can be determined according to a vehicle speed signal collected by a vehicle speed sensor.

Optionally, the difference value between the actual vehicle speed and the target vehicle speed can be calculated, and whether to perform speed limitation on the vehicle is determined according to the difference value.

Optionally, the target vehicle speed may be a maximum vehicle speed at which the vehicle can travel set by a user or a manufacturer. For example, when the user is not proficient in driving the vehicle, a relatively low target vehicle speed can be set; when the user is proficient in driving the vehicle, a relatively high target vehicle speed can be set. The target vehicle speed is less than the maximum vehicle speed that the vehicle can reach. For example, when the maximum vehicle speed that the vehicle can reach is 100 km/h, the target vehicle speed is less than or equal to the vehicle speed. When the user is not proficient in driving the vehicle, the target vehicle speed can be set to 50 km/h or 60 km/h; when the user is proficient in driving the vehicle, the target vehicle speed can be set to 90 km/h or 100 km/h.

S202, determining an average rotational speed of the vehicle, where the average rotational speed is associated with a load of the vehicle.

When controlling the vehicle speed of the vehicle, if the control is directly performed through the target vehicle speed, the problem of a relatively large change in rotational speed may occur, thus causing jerking. For example, if the vehicle speed needs to be limited to 40 km/h, the vehicle speed is usually controlled to reach 40 km/h first, in the process, the speed usually exceeds 40 km/h, and then the vehicle speed is reduced. The change process of the actual vehicle speed may be 38 km/h, 40 km/h, 42 km/h, 41 km/h, 40 km/h, 39 km/h and then 40 km/h. In this process, the vehicle speed is constantly changing. When the vehicle adopts a continuously variable transmission and a mechanical throttle to realize the change of the vehicle speed, the fluctuation of the rotational speed will be relatively large during the change of the vehicle speed, thus causing jerking.

At the same time, it is found that there is no obvious jerking when the gear is in an L gear during vehicle speed limitation, because the speed limitation is realized when the engine speed reaches the set maximum speed range, that is, the speed limitation is realized by limiting the rotational speed, and no obvious jerking is generated at this time. Therefore, it is considered to realize the vehicle speed limitation by limiting the rotational speed in the whole process of vehicle speed limitation.

When realizing the vehicle speed limitation based on the rotational speed limitation, the average rotational speed of the vehicle can be obtained first, and the rotational speed of the vehicle can be adjusted based on the obtained average rotational speed, so that the rotational speed of the vehicle can be flexibly controlled.

Optionally, the average rotational speed is related to the load of the vehicle, and the corresponding average rotational speeds are different when the vehicle travels on a flat ground and climbs a slope at the same speed.

When limiting the vehicle speed by limiting the rotational speed, a rotational speed fluctuation range can also be set for different vehicle speeds. In this way, the corresponding target rotational speed is the same for the same vehicle speed, but the load condition is not considered. The rotational speed of the vehicle is different when the load is different. If the same target rotational speed is set for all loads, the problem of a relatively large change in rotational speed will also occur, and a certain jerking will also exist.

S203, adjusting a rotational speed of the vehicle according to the difference value and the average rotational speed, so as to control the actual vehicle speed to be within a preset range of the target vehicle speed.

When controlling the speed of the vehicle, the rotational speed of the vehicle can be adjusted according to the calculated difference value and the obtained average rotational speed. Since there is a certain correlation between the rotational speed and the vehicle speed, the vehicle speed will increase when the rotational speed increases, and the vehicle speed will decrease correspondingly when the rotational speed decreases. Therefore, the adjustment manner of the average rotational speed can be determined according to the determined difference value to control the rotational speed of the vehicle to be the adjusted average rotational speed.

Since there is a correlation between the rotational speed and the vehicle speed, the actual vehicle speed of the vehicle will be controlled within the preset range of the target vehicle speed after the rotational speed of the vehicle is adjusted based on the difference value and the average rotational speed.

When limiting the vehicle speed by limiting the rotational speed, a rotational speed fluctuation range can also be set for different vehicle speeds, but this manner needs to preset rotational speed values for different vehicle speeds in different gears, which requires a lot of data presetting in advance and is not flexible enough, and cannot be applied to a transmission mechanism such as a continuously variable transmission. The present application obtains the average rotational speed and adjusts the rotational speed of the vehicle based on the average rotational speed, which has higher flexibility compared with the manner of presetting the fluctuation range of the rotational speed based on different vehicle speeds in advance.

The control method for vehicle speed limitation provided by the present application determines a difference value between an actual vehicle speed and a target vehicle speed of a vehicle during travel, determines an average rotational speed of the vehicle, where the average rotational speed is associated with the load of the vehicle, and adjusts a rotational speed of the vehicle according to the difference value and the average rotational speed, so as to control the actual vehicle speed to be within a preset range of the target vehicle speed. The vehicle speed is controlled by controlling the rotational speed of the vehicle, and the rotational speed will not change greatly in the process of controlling the vehicle speed, which can effectively eliminate the jerking. In addition, the rotational speed of the vehicle is adjusted according to the average rotational speed of the vehicle, which has high flexibility and a self-correction function.

Optionally, the adjusting the rotational speed of the vehicle according to the difference value and the average rotational speed includes:
obtaining an absolute value of the difference value; and
when the absolute value of the difference value is less than a first threshold value, determining a target rotational speed according to the average rotational speed, and adjusting the rotational speed of the vehicle to the target rotational speed.

When adjusting the rotational speed of the vehicle according to the difference value between the actual vehicle speed and the target vehicle speed, the absolute value of the difference value can be determined, where the difference value refers to the result of subtracting the target vehicle speed from the actual vehicle speed. When the absolute value of the difference value is less than the first threshold value, the rotational speed of the vehicle needs to be controlled.

For example, when the first threshold value is 5, the absolute value of the difference value being less than the first threshold value means that the difference value is greater than -5 and less than 5, indicating that the speed limitation needs to be performed when the actual vehicle speed is close to the target vehicle speed. In practice, when the target vehicle speed is 50 km/h, the rotational speed of the vehicle needs to be controlled when the actual vehicle speed is greater than 45 km/h, which can avoid performing speed limitation on the vehicle when the vehicle speed is relatively low.

When the absolute value of the difference value is less than the first threshold value, the target rotational speed can be determined based on the average rotational speed, and the rotational speed of the vehicle can be adjusted to the target rotational speed to realize the control of the vehicle speed.

Optionally, the adjusting the rotational speed of the vehicle according to the difference value and the average rotational speed further includes:
when the absolute value of the difference value is greater than or equal to the first threshold value, not performing an operation of controlling the rotational speed of the vehicle.

When the absolute value of the difference value is greater than or equal to the first threshold value, it means that the actual vehicle speed is less than the target vehicle speed and has a large distance from the target vehicle speed, and any operation is not needed to be performed at this time.

In practice, when the vehicle speed is controlled according to the above control logic, the actual vehicle speed of the vehicle will not be much higher than the target vehicle speed, that is, there will be no case where the difference value is greater than the first threshold value.

By judging whether the absolute value of the difference value is less than the first threshold value, the rotational speed control can be performed when the actual vehicle speed is close to the target vehicle speed to realize the vehicle speed limitation, and avoid performing the speed limitation on the vehicle when the vehicle speed is relatively low.

Optionally, the determining the target rotational speed according to the average rotational speed and adjusting the rotational speed of the vehicle to the target rotational speed includes:
repeating the following steps until the absolute value of the difference value is less than or equal to a second threshold value:
judging whether the absolute value of the difference value is greater than the second threshold value, where the second threshold value is less than the first threshold value; and
if yes, determining the target rotational speed according to the average rotational speed and a first preset value, controlling the rotational speed of the vehicle according to the target rotational speed within a target time step, and obtaining an updated absolute value of the difference value and an updated average rotational speed after the target time step elapses, so as to control the rotational speed of the vehicle based on the updated difference value and the updated average rotational speed.

After determining that the absolute value of the difference value is less than the first threshold value, it is necessary to continue to determine the magnitude relationship between the absolute value of the difference value and the second threshold value to determine which strategy is adopted to adjust the rotational speed of the vehicle.

The process of adjusting the rotational speed of the vehicle is a dynamic process, and it is necessary to continuously judge whether the absolute value of the difference value is greater than the second threshold value, where the second threshold value is a value less than the first threshold value. For example, when the first threshold value is 5, the second threshold value can be 1. When the absolute value of the difference value is greater than the second threshold value, it means that there is still a certain gap between the actual vehicle speed and the target vehicle speed, and the target rotational speed value needs to be dynamically adjusted at this time, such as continuously increasing the target rotational speed or continuously decreasing the target rotational speed until the absolute value of the difference value is less than or equal to the second threshold value.

Optionally, when it is determined that the absolute value of the difference value is greater than the second threshold value, the target rotational speed can be determined according to the average rotational speed and the first preset value. For example, the first preset value can be 25 rpm, that is, the average rotational speed is adjusted according to the first preset value to obtain the target rotational speed, and the rotational speed of the vehicle is controlled to reach the target rotational speed.

For example, when it is determined that the absolute value of the difference value is greater than the second threshold value 1, after the target vehicle speed is determined, the rotational speed of the vehicle can be controlled to be the target rotational speed with a target time step of t. After the target time step elapses, the actual vehicle speed can be continuously obtained, the updated absolute value of the difference value and the updated average rotational speed can be recalculated, and the relationship between the updated difference value and the second threshold value can be continuously judged. If the updated difference value is greater than the second threshold value, the target rotational speed is continuously updated, and the rotational speed of the vehicle is controlled to be the target rotational speed.

By judging the relationship between the absolute value of the difference value and the second threshold value, the rotational speed of the vehicle is adjusted step by step when the actual vehicle speed is quite different from the target vehicle speed, so as to realize that the actual vehicle speed approaches the target vehicle speed stably.

Optionally, the determining the target rotational speed according to the average rotational speed and the first preset value includes:
when the difference value is negative, determining a sum of the average rotational speed and the first preset value as the target rotational speed; and/or
when the difference value is positive, determining a difference between the average rotational speed and the first preset value as the target rotational speed.

When determining the target rotational speed according to the average rotational speed and the first preset value, the positive or negative of the difference value can be judged. When the difference value is negative, it means that the actual vehicle speed is less than the target vehicle speed on the basis that the difference value is greater than the second threshold value. To realize that the actual vehicle speed approaches the target vehicle speed, the average rotational speed needs to be increased to obtain the target rotational speed. For example, when the second threshold value is 1, the difference value being negative can mean that the difference value is less than -1, and the target rotational speed is the sum of the average rotational speed and the first preset value 25 rpm.

On the contrary, when the difference value is positive, it means that the actual vehicle speed is greater than the target vehicle speed on the basis that the difference value is greater than the second threshold value. To realize that the actual vehicle speed approaches the target vehicle speed, the average rotational speed needs to be reduced to obtain the target rotational speed. For example, when the second threshold value is 1, the difference value being positive can mean that the difference value is greater than 1, and the target rotational speed is the difference between the average rotational speed and the first preset value 25 rpm.

Since the rotational speed is directly proportional to the vehicle speed, the average rotational speed needs to be increased when the actual vehicle speed is less than the target vehicle speed, and the average rotational speed needs to be decreased when the actual vehicle speed is greater than the target vehicle speed.

By determining how to determine the target rotational speed from the actual rotational speed according to the positive or negative of the difference value, the accuracy of the determined target rotational speed can be improved.

Optionally, the determining the target rotational speed according to the average rotational speed and adjusting the rotational speed of the vehicle to the target rotational speed further includes:
when the absolute value of the difference value is less than or equal to the second threshold value, determining a range of the target rotational speed according to the average rotational speed and a second preset value;
where a minimum value of the target rotational speed is a difference between the average rotational speed and the second preset value, a maximum value of the target rotational speed is a sum of the average rotational speed and the second preset value, and the second preset value is greater than the first preset value.

When the absolute value of the difference value is less than or equal to the second threshold value, it means that the actual vehicle speed is not much different from the target vehicle speed. For example, when the second threshold value is 1 and the target vehicle speed is 40 km/h, the actual vehicle speed being 39 km/h to 41 km/h means that the absolute value of the difference value is less than or equal to the second threshold value. At this time, the range of the target rotational speed can be determined, and the range of the target rotational speed can be determined by the target rotational speed and the second preset value. The second preset value can be greater than the first preset value. For example, when the first preset value is 25 rpm, the second preset value can be 100 rpm.

Specifically, the range of the target rotational speed is the average rotational speed plus or minus the second preset value. When the average rotational speed is N and the second preset value is 100 rpm, the range of the target rotational speed is N±100 rpm.

When the actual vehicle speed is not much different from the target vehicle speed, a range of the target rotational speed can be determined to make the rotational speed of the vehicle be within the range of the target rotational speed, so that the actual vehicle speed is kept in a range with little difference from the target vehicle speed, realizing the control of the actual vehicle speed.

Optionally, the determining the average rotational speed of the vehicle includes:
obtaining a rotational speed of the vehicle corresponding to each moment within a preset time period, where a start moment of the preset time period is a moment N unit times before a current moment, and an end moment of the preset time period is the current moment; and
determining an average value calculated according to the rotational speed corresponding to each moment within the preset time period as the average rotational speed.

When determining the average rotational speed of the vehicle, the actual rotational speed of the vehicle can be obtained through an electromagnetic induction sensor. Optionally, a rotational speed at the current moment and rotational speeds starting from the moment N unit times before the current moment can be obtained. After the rotational speeds in the preset time period are obtained, the average value of the rotational speeds can be calculated to determine the average rotational speed.

Through the above method for determining the average rotational speed, the average rotational speed at the current moment can be accurately obtained, thereby improving the accuracy of the determined target rotational speed.

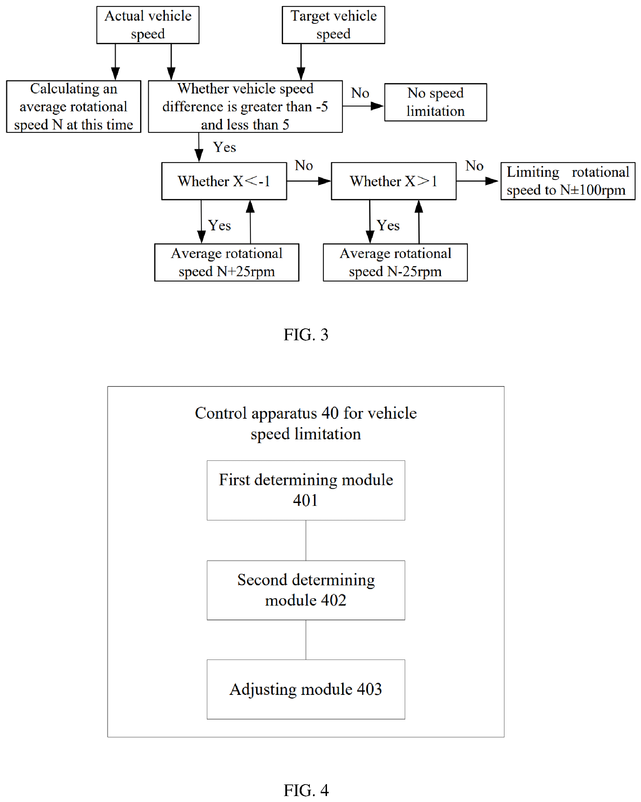

FIG. 3 is a schematic flowchart of another control method for vehicle speed limitation provided by an embodiment of the present application. As shown in FIG. 3, a specific implementation manner is: obtaining an actual vehicle speed and a target vehicle speed, calculating a vehicle speed difference between the actual vehicle speed and the target vehicle speed, judging whether the vehicle speed difference is greater than -5 and less than 5, and if yes, judging whether the vehicle speed difference is less than -1, if yes, increasing an average rotational speed by 25 rpm to obtain a target rotational speed, adjusting the rotational speed of the vehicle to the target rotational speed and obtaining the actual vehicle speed again, calculating a new vehicle speed difference, and judging whether the new vehicle speed difference is less than -1. If the vehicle speed difference is not less than -1, judging whether the vehicle speed difference is greater than 1, and if the vehicle speed difference is greater than 1, decreasing the average rotational speed by 25 rpm to obtain the target rotational speed, adjusting the rotational speed of the vehicle to the target rotational speed and obtaining the actual vehicle speed again, calculating a new vehicle speed difference, and judging whether the new vehicle speed difference is greater than 1. If the new vehicle speed difference is not greater than 1, obtaining the target rotational speed by increasing or decreasing the average rotational speed by 100 rpm, and adjusting the rotational speed of the vehicle to the target rotational speed, so as to control the actual vehicle speed of the vehicle to approach the target vehicle speed and realize the speed limitation of the vehicle.

FIG. 4 is a schematic structural diagram of a control apparatus for vehicle speed limitation provided by an embodiment of the present application. The apparatus 40 includes:
a first determining module 401, configured to determine a difference value between an actual vehicle speed and a target vehicle speed of a vehicle during travel;
a second determining module 402, configured to determine an average rotational speed of the vehicle;
an adjusting module 403, configured to adjust a rotational speed of the vehicle according to the difference value and the average rotational speed, so as to control the actual vehicle speed to be within a preset range of the target vehicle speed.

Optionally, when adjusting the rotational speed of the vehicle according to the difference value and the average rotational speed, the adjusting module 403 is specifically configured to:
obtain an absolute value of the difference value;
when the absolute value of the difference value is less than a first threshold value, determine a target rotational speed according to the average rotational speed, and adjust the rotational speed of the vehicle to the target rotational speed.

Optionally, when determining the target rotational speed according to the average rotational speed and adjusting the rotational speed of the vehicle to the target rotational speed, the adjusting module 403 is specifically configured to:
repeat the following steps until the absolute value of the difference value is less than or equal to a second threshold value:
judge whether the absolute value of the difference value is greater than the second threshold value, where the second threshold value is less than the first threshold value; and
if yes, determine the target rotational speed according to the average rotational speed and a first preset value, control the rotational speed of the vehicle according to the target rotational speed within a target time step, and obtain an updated absolute value of the difference value and an updated average rotational speed after the target time step elapses, so as to control the rotational speed of the vehicle based on the updated difference value and the updated average rotational speed.

Optionally, when determining the target rotational speed according to the average rotational speed and the first preset value, the adjusting module 403 is specifically configured to:
when the difference value is negative, determine a sum of the average rotational speed and the first preset value as the target rotational speed; and/or
when the difference value is positive, determine a difference between the average rotational speed and the first preset value as the target rotational speed.

Optionally, when determining the target rotational speed according to the average rotational speed and adjusting the rotational speed of the vehicle to the target rotational speed, the adjusting module 403 is further configured to:
when the absolute value of the difference value is less than or equal to the second threshold value, determine a range of the target rotational speed according to the average rotational speed and a second preset value;
where a minimum value of the target rotational speed is a difference value between the average rotational speed and the second preset value, a maximum value of the target rotational speed is a sum of the average rotational speed and the second preset value, and the second preset value is greater than the first preset value.

Optionally, when adjusting the rotational speed of the vehicle according to the difference value and the average rotational speed, the adjusting module 403 is further configured to:
when the absolute value of the difference value is greater than or equal to the first threshold value, not perform an operation of controlling the rotational speed of the vehicle.

Optionally, the second determining module 402 is specifically configured to:
obtain a rotational speed corresponding to each moment of the vehicle within a preset time period, where a start moment of the preset time period is a moment N unit times before a current moment, and an end moment of the preset time period is the current moment; and
determine an average value calculated according to the rotational speed corresponding to each moment within the preset time period as the average rotational speed.

The control apparatus for vehicle speed limitation provided by the embodiments of the present application can implement the control method for vehicle speed limitation in the embodiments shown in FIG. 2 or FIG. 3, and the implementation principle and technical effect thereof are similar, which will not be repeated here.

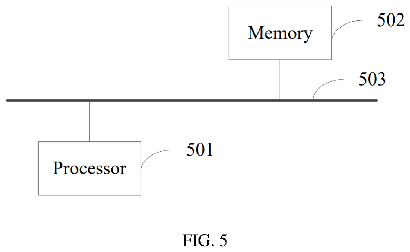

FIG. 5 is a schematic hardware structural diagram of an electronic device provided by an embodiment of the present application. As shown in FIG. 5, the electronic device provided by this embodiment includes at least one processor 501 and a memory 502, where the processor 501 and the memory 502 are connected through a bus 503.

In a specific implementation, the at least one processor 501 executes computer-executable instructions stored in the memory 502, so that the at least one processor 501 executes the methods in the above method embodiments.

For the specific implementation of the processor 501, reference may be made to the above method embodiments, and the implementation principle and technical effect thereof are similar, which will not be repeated here in this embodiment.

In the embodiment shown in FIG. 5 above, it should be understood that the processor may be a Central Processing Unit (English: Central Processing Unit, abbreviated as CPU), and may also be other general-purpose processor or a Digital Signal Processor (English: Digital Signal Processor, abbreviated as DSP), an Application Specific Integrated Circuit (English: Application Specific Integrated Circuit, abbreviated as ASIC), etc. The general-purpose processor may be a microprocessor, or the processor may also be any conventional processor, etc. The steps of the method disclosed in combination with the application can be directly embodied as being executed and completed by a hardware processor, or executed and completed by a combination of hardware and software modules in the processor.

The memory may include a high-speed Random Access Memory (RAM), and may also include a Non-Volatile Memory (NVM), such as at least one magnetic disk memory.

The bus may be an Industry Standard Architecture (Industry Standard Architecture, ISA) bus, a Peripheral Component Interconnect (Peripheral Component, PCI) bus, or an Extended Industry Standard Architecture (Extended Industry Standard Architecture, EISA) bus, etc. The bus can be divided into an address bus, a data bus, a control bus, etc. For the convenience of representation, the bus in the accompanying drawings of the present application is not limited to only one bus or one type of bus.

The embodiments of the present application also provide a computer-readable storage medium, in which computer-executable instructions are stored, and when a processor executes the computer-executable instructions, the methods in the above method embodiments are implemented.

The embodiments of the present application also provide a computer program product, including a computer program, which, when executed by a processor, implements the methods in the above method embodiments.

The above-mentioned computer-readable storage medium, the above-mentioned readable storage medium may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk or optical disc. The readable storage medium may be any available medium that can be accessed by a general-purpose or special-purpose computer.

An exemplary readable storage medium is coupled to a processor, so that the processor can read information from the readable storage medium and write information into the readable storage medium. Of course, the readable storage medium may also be a component of the processor. The processor and the readable storage medium may be located in an Application Specific Integrated Circuit (Application Specific Integrated Circuit, abbreviated as ASIC). Of course, the processor and the readable storage medium may also exist as discrete components in the device.

It should be noted that in this application, the terms "include", "comprise" or any other variants thereof are intended to cover non-exclusive inclusion, so that a process, a method, an item or a device including a series of elements not only includes those elements, but also includes other elements not explicitly listed, or also includes inherent elements of the process, method, item or device. Without more restrictions, an element limited by the sentence "including a..." does not exclude the existence of other identical elements in the process, method, item or device including the element.

The serial numbers of the embodiments in the present application are only for description and do not represent the advantages and disadvantages of the embodiments.

Through the description of the above implementations, those skilled in the art can clearly understand that the methods in the above embodiments can be implemented by means of software plus a necessary general hardware platform, and of course can also be implemented by hardware, but in many cases the former is a better implementation. Based on such understanding, the technical solution of the present application essentially or the part that contributes to the prior art can be embodied in the form of a software product, which is stored in a storage medium (such as ROM/RAM, magnetic disk, optical disc) and includes several instructions to make a terminal device (which may be a mobile phone, a computer, a server, an air conditioner, a network device, etc.) execute the methods described in each embodiment of the present application.

The above are only the preferred embodiments of the present application, and are not intended to limit the patent scope of the present application. Any equivalent structural or equivalent process transformation made by using the contents of the specification and the accompanying drawings of the present application, or directly or indirectly applied in other related technical fields, is similarly included in the patent protection scope of the present application.

## Claims

1. A control method for vehicle speed limitation, comprising:
determining a difference value between an actual vehicle speed and a target vehicle speed of a vehicle during travel;
determining an average rotational speed of the vehicle, wherein the average rotational speed is associated with a load of the vehicle; and
adjusting a rotational speed of the vehicle according to the difference value and the average rotational speed, so as to control the actual vehicle speed to be within a preset range of the target vehicle speed.

2. The method according to claim 1, wherein the adjusting the rotational speed of the vehicle according to the difference value and the average rotational speed comprises:
obtaining an absolute value of the difference value; and
when the absolute value of the difference value is less than a first threshold value, determining a target rotational speed according to the average rotational speed, and adjusting the rotational speed of the vehicle to the target rotational speed.

3. The method according to claim 2, wherein the determining the target rotational speed according to the average rotational speed and adjusting the rotational speed of the vehicle to the target rotational speed comprises:
repeating the following steps until the absolute value of the difference value is less than or equal to a second threshold value:
judging whether the absolute value of the difference value is greater than the second threshold value, wherein the second threshold value is less than the first threshold value; and
if yes, determining the target rotational speed according to the average rotational speed and a first preset value, controlling the rotational speed of the vehicle according to the target rotational speed within a target time step, and obtaining an updated absolute value of the difference value and an updated average rotational speed after the target time step elapses, so as to control the rotational speed of the vehicle based on the updated difference value and the updated average rotational speed.

4. The method according to claim 3, wherein the determining the target rotational speed according to the average rotational speed and the first preset value comprises:
when the difference value is negative, determining a sum of the average rotational speed and the first preset value as the target rotational speed; and/or
when the difference value is positive, determining a difference between the average rotational speed and the first preset value as the target rotational speed.

5. The method according to claim 3 or 4, wherein the determining the target rotational speed according to the average rotational speed and adjusting the rotational speed of the vehicle to the target rotational speed further comprises:
when the absolute value of the difference value is less than or equal to the second threshold value, determining a range of the target rotational speed according to the average rotational speed and a second preset value;
wherein a minimum value of the target rotational speed is a difference between the average rotational speed and the second preset value, a maximum value of the target rotational speed is a sum of the average rotational speed and the second preset value, and the second preset value is greater than the first preset value.

6. The method according to any one of claims 2 to 5, wherein the adjusting the rotational speed of the vehicle according to the difference value and the average rotational speed further comprises:
when the absolute value of the difference value is greater than or equal to the first threshold value, not performing an operation of controlling the rotational speed of the vehicle.

7. The method according to any one of claims 1 to 6, wherein the determining the average rotational speed of the vehicle comprises:
obtaining a rotational speed of the vehicle corresponding to each moment within a preset time period, wherein a start moment of the preset time period is a moment N unit times before a current moment, and an end moment of the preset time period is the current moment; and
determining an average value calculated according to the rotational speed corresponding to each moment within the preset time period as the average rotational speed.

8. A control apparatus for vehicle speed limitation, wherein the apparatus comprises:
a first determining module, configured to determine a difference value between an actual vehicle speed and a target vehicle speed of a vehicle during travel;
a second determining module, configured to determine an average rotational speed of the vehicle, wherein the average rotational speed is associated with a load of the vehicle; and
an adjusting module, configured to adjust a rotational speed of the vehicle according to the difference value and the average rotational speed, so as to control the actual vehicle speed to be within a preset range of the target vehicle speed.

9. An electronic device, comprising at least one processor and a memory;
wherein the memory stores computer-executable instructions; and
the at least one processor executes the computer-executable instructions stored in the memory, so that the at least one processor executes the method according to any one of claims 1 to 7.

10. A computer-readable storage medium, wherein computer-executable instructions are stored in the computer-readable storage medium, and when a processor executes the computer-executable instructions, the method according to any one of claims 1 to 7 is implemented.

11. A computer program product, comprising a computer program which, when executed by a processor, implements the method according to any one of claims 1 to 7.
